(19) Europäisches Patentamt
European Patent Office
Office européen des brevets

(11) **EP 2 373 962 B1**

(12) **FASCICULE DE BREVET EUROPEEN**

(45) Date de publication et mention
de la délivrance du brevet:
**12.02.2014 Bulletin 2014/07**

(21) Numéro de dépôt: **09829862.3**

(22) Date de dépôt: **21.12.2009**

(51) Int Cl.:
*G01J 3/06* *(2006.01)*          *G01J 3/32* *(2006.01)*
*G02B 6/02* *(2006.01)*          *G02B 5/20* *(2006.01)*
*G01J 3/02* *(2006.01)*          *G01J 3/18* *(2006.01)*

(86) Numéro de dépôt international:
**PCT/FR2009/052636**

(87) Numéro de publication internationale:
**WO 2010/076520 (08.07.2010 Gazette 2010/27)**

(54) **ENGIN AERONAUTIQUE**

LUFTFAHRTFAHRZEUG

AERONAUTICAL VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.01.2009 FR 0950010**

(43) Date de publication de la demande:
**12.10.2011 Bulletin 2011/41**

(73) Titulaire: **Centre National d'Etudes Spatiales 75001 Paris (FR)**

(72) Inventeur: **BERTHON, Jacques
F-31400 Toulouse (FR)**

(74) Mandataire: **Blot, Philippe Robert Emile
Cabinet Lavoix
2, place d'Estienne d'Orves
75441 Paris Cedex 09 (FR)**

(56) Documents cités:
**JP-A- 4 304 079     JP-A- 4 340 428
US-A- 5 166 755**

• **HERNANDEZ S ET AL: "2D resonant grating optical filters for 850 nm wavelength, in normal and oblique incidence" LASERS AND ELECTRO-OPTICS, 2008. CLEO 2008. CONFERENCE ON, IEEE, PISCATAWAY, NJ, USA, 4 mai 2008 (2008-05-04), pages 1-2, XP031277658 ISBN: 978-1-55752-859-9**
• **FEHREMBACH ANNE-LAURE ET AL: "Unpolarized narrow-band filtering with resonant gratings" APPLIED PHYSICS LETTERS, AIP, AMERICAN INSTITUTE OF PHYSICS, MELVILLE, NY, US, vol. 86, no. 12, 15 mars 2005 (2005-03-15), pages 121105-121105, XP012064688 ISSN: 0003-6951**

## Description

La présente invention concerne un engin aéronautique du type comportant un spectromètre apte à générer une analyse spectrale de rayonnements réfléchis par une portion de la surface de la terre, l'engin étant en orbite autour de la terre avec un mouvement relatif par rapport à la surface de la terre.

Le document EP 0 767 361 décrit un engin aéronautique comportant un spectromètre apte à déterminer le spectre des rayonnements réfléchis par la surface de la terre. Le spectromètre monté dans cet engin est généralement du type interféromètre de Fabry Perrot, Michelson, Mac Zehnder ou utilise des éléments spectralement dispersifs comme les prismes et réseaux de diffraction. L'engin comprend également des moyens de déplacement du spectromètre ou d'un élément de celui-ci pour décomposer les rayonnements incidents. Ce déplacement doit être précis et fiable. Un autre engin aéronautique est décrit dans le document JP4340428 A.

L'invention a pour but de proposer un engin aéronautique comportant un spectromètre ne nécessitant pas de moyens de déplacement du spectromètre ou d'un élément de celui-ci.

A cet effet, l'invention à pour objet un engin aéronautique comportant un spectromètre apte à générer une analyse spectrale de rayonnements réfléchis par une portion de la surface de la terre, l'engin étant en orbite autour de la terre avec un mouvement relatif par rapport à la surface de la terre,

caractérisé en ce que le spectromètre comprend un filtre comportant un réseau résonant composé d'une nano-structure périodique et supportant un mode guidé, le filtre étant propre à filtrer dans une bande spectrale étroite de rayonnements incidents dépendant de l'angle d'incidence desdits rayonnements sur le filtre ; ladite bande spectrale filtrée étant propre à varier continûment dans une plage spectrale plus large, lorsque l'angle d'incidence desdits rayonnements incidents varie continûment, et l'engin comprend des moyens de détermination de la bande spectrale de rayonnements filtrés issus d'une même portion de surface pour plusieurs positions de l'engin par rapport à la portion de surface.

Avantageusement, cet engin utilise son déplacement relatif par rapport à la surface de la terre pour faire varier l'angle d'incidence des rayonnements pénétrant dans le spectromètre et ainsi réaliser une décomposition spectrale des rayonnements réfléchis par la surface de la terre.

Suivant des modes particuliers de réalisation, l'engin comporte l'une ou plusieurs des caractéristiques suivantes, prises isolément ou en combinaison :

- les moyens de détermination comporte des moyens de détection de l'amplitude des rayonnements filtrés dans la bande spectrale, lesdits moyens de détection comprenant au moins une première colonne de pixels disposée selon une direction d'avancement de l'engin, ladite première colonne étant propre à capter les rayonnements filtrés issus de la portion de surface de la terre ;

- l'engin comporte des moyens de traitement aptes à déterminer les longueurs d'onde des rayonnements réfléchis par une même portion de surface de la terre à partir des données mesurées pendant une période de temps égale à la période de temps nécessaire pour que le déplacement de l'engin provoque une variation de l'angle d'incidence des rayonnements issus d'une cible permettant le balayage spectral de l'ensemble de la plage spectrale du filtre ;

- les moyens de détection comprennent au moins une seconde colonne de pixels parallèle à ladite première colonne de pixels, ladite seconde colonne étant propre à imager des portions de surface de la terre adjacentes à la portion de surface de la terre réfléchissant les rayonnements décomposés par le spectromètre ;

- le filtre est fixe par rapport à l'engin ; et

- la plage spectrale est plus de 100 fois plus large que la bande spectrale.

La présente invention a également pour objet un procédé d'analyse spectrale de rayonnements réfléchis par une portion de surface de la terre à l'aide d'un engin aéronautique propre à se déplacer en orbite autour de la terre avec un mouvement relatif par rapport à la surface de la terre, ledit engin comprenant un spectromètre comportant un filtre comportant un réseau résonant composé d'une nano-structure périodique supportant un mode guidé, le filtre étant propre à filtrer une bande spectrale étroite dépendant d'un angle d'incidence desdits rayonnements sur le filtre, caractérisé en ce que le procédé comporte :

- une étape de filtrage des rayonnements réfléchis par ladite portion de surface ;

- une étape déplacement de l'engin par rapport à ladite portion de surface, ladite étape de déplacement étant réalisée pendant l'étape de filtrage, la bande spectrale filtrée variant continûment dans une plage spectrale plus large lorsque l'angle d'incidence des rayonnements incidents sur le filtre varie continûment ;

- une étape de détermination de la bande spectrale de rayonnements filtrés issus d'une même portion de surface pour plusieurs positions relatives de l'engin par rapport à la portion de surface.

L'invention sera mieux comprise à la lecture de la description qui va suivre, donnée uniquement à titre d'exemple et faite en se référant aux dessins annexés, sur lesquels :

- la figure 1 est une vue schématique en perspective d'un engin aéronautique selon l'invention survolant une partie de la surface de la terre ;

- la figure 2 est une vue schématique d'un spectromètre et des moyens de détection équipant l'engin de la figure 1 ;
- la figure 3 est une vue schématique en perspective d'un filtre utilisé dans le spectromètre illustré sur la figure 2 ;
- la figure 4 est une représentation schématique des rayonnements générés par le spectromètre illustré sur la figure 2, et des moyens de détection.

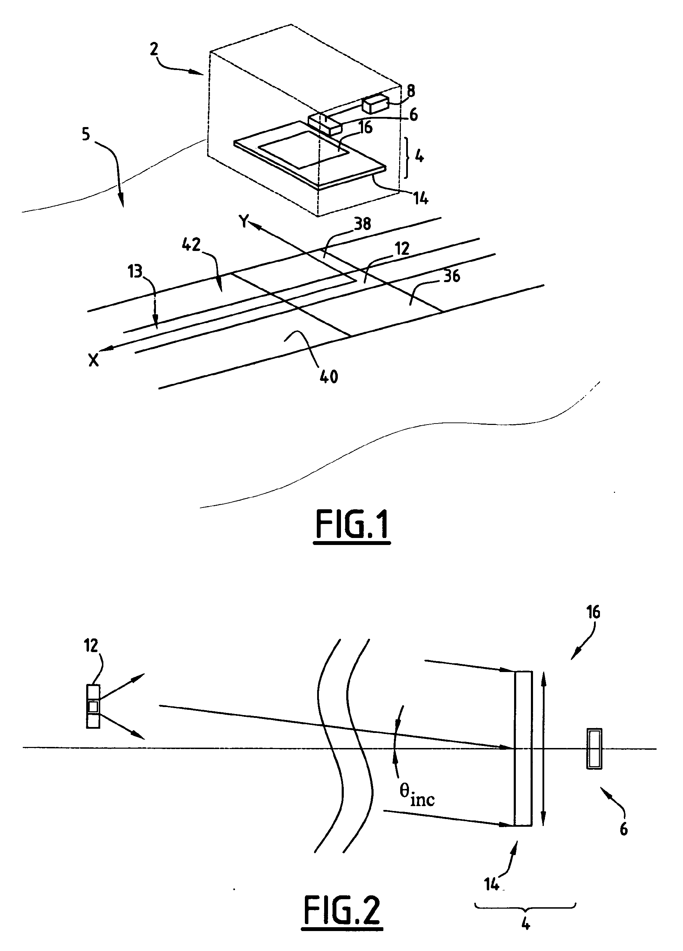

En référence à la figure 1, un engin aéronautique tel que, par exemple, un satellite 2 selon l'invention est équipé d'un spectromètre 4 apte à décomposer les rayonnements réfléchis par la surface de la terre 5, des moyens 6 de détection des rayonnements décomposés, et des moyens de traitement 8 des données spectrales détectés par les moyens 6.

Le satellite 2 est apte à se déplacer en orbite basse autour de la terre. Il présente une période de révolution différente de la période de rotation de la terre sur elle-même, de sorte que le satellite 2 est en déplacement relatif par rapport à la surface de la terre 5.

Le spectromètre 4 est propre à réaliser la décomposition spectrale de rayonnements réfléchis par une portion 12 de la surface de la terre 5 disposée sous le satellite. Lorsque le satellite 2 avance, le spectromètre 4 réalise la décomposition spectrale d'une bande de surface 13 qui s'étend selon la direction d'avancement du satellite X. Cette bande est généralement appelée trace.

Comme la surface de la terre est éloignée du spectromètre 4, les rayonnements réfléchis par la portion de surface 12 sont parallèles et présentent un unique angle d'incidence $\theta_{inc}$ par rapport spectromètre 4.

En référence à la figure 2, le spectromètre 4 comporte un filtre résonnant 14 placé en entrée d'un imageur ou moyens de détection 6 haute résolution. Cette imageur est composé d'un objectif qui focalise les rayons sur un détecteur matriciel. L'objectif est schématisé par une lentille convergente 16 disposée en aval du filtre 14.

Les moyens de détection 6 composé de nombreux pixels en ligne et colonne et placé au foyer de l'objectif (la lentille convergente 16) est apte à échantillonner spatialement et spectralement les rayonnements filtrés par le filtre résonnant.

Le filtre 14 peut travailler en transmission et en réflexion. Il est apte à filtrer des rayonnements ayant des longueurs d'onde compris dans une bande spectrale étroite $\Delta\lambda$ lorsque l'angle d'incidence $\theta_{inc}$ est fixe. Cette bande spectrale $\Delta\lambda$ est propre à varier continûment dans une plage spectrale $[\lambda_0,\lambda_3]$ plus large, lorsque l'angle d'incidence $\theta_{inc}$ sur le filtre 14 varie continûment.

La largeur à mi-hauteur de la bande spectrale $\Delta\lambda$ peut-être aussi étroite que 0,1 nm grâce aux performances exceptionnelles des filtres résonnants.

La largeur de la plage spectrale $[\lambda_0,\lambda_3]$ peut-être supérieure à 100 nm sans modification notable des performances du filtre.

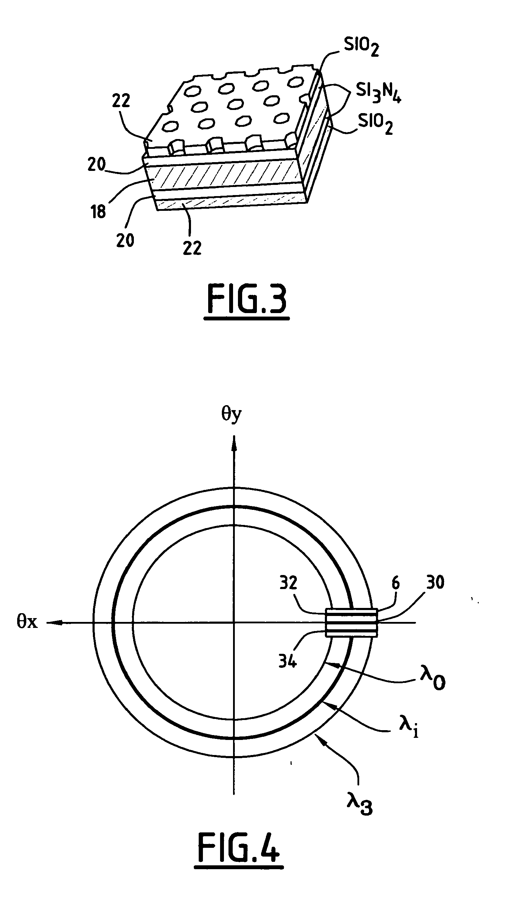

En référence à la figure 3, le filtre 14 est un réseau résonnant composé d'une nanostructure périodique sur un guide d'onde plan possédant des modes propres, l'ensemble est déposé sur un substrat. La théorie des réseaux résonnants montre qu'un mode guidé peut-être excité par une onde évanescente, mais pas par une onde plane incidente propagative (cf. Thèse de Anne-Laure Fehrembach Université d'Aix-Marseille 3 soutenue le 29 septembre 2003). Le réseau dont la période est inférieure à la longueur d'onde a tous ces ordres de diffraction qui sont évanescents. Pour un angle d'incidence donné il peut exciter un mode propre du guide et servir également à le découpler. Le réseau résonnant est ainsi d'abord un réseau coupleur-découpleur, permettant l'excitation de modes propres d'une structure. Il en résulte un pic de résonnance dont la courbe de réflectivité est fonction de la longueur d'onde ou de l'angle d'incidence.

Le filtre 14 fonctionne en réflexion. Il est constitué d'un substrat qui peut-être en verre 18 présentant deux faces principales parallèles. Chaque face principale est recouverte d'une couche 20 anti-réflexion nitrure de silicium $Si_3N_4$ et d'une couche anti-réflexion 22 de verre de silice $SiO_2$ déposée par un procédé de dépôt à vapeur chimique à basse pression combiné à un procédé de dépôt par plasma.

La couche de verre de silice 22 est formée par un réseau hexagonal ayant une période inférieure à la longueur d'onde de travail. Le réseau est muni de trous dont le diamètre et la profondeur influent sur la largeur du filtre.

Ce filtre 14 est décrit dans le document intitulé « Unpolarised narrow band filtering with resonant gratings » publié le 22 mars 2005 dans une revue intitulée Applied physics letters 86, 121105, et dans le document XP031277658.

La transmission par le filtre 14 de la bande spectrale étroite $\Delta\lambda$ traduit le couplage des rayonnements incidents avec un mode guidé du filtre 14. Comme le réseau de la couche de verre de silice 22 est périodique, les rayonnements de la bande spectrale étroite $\Delta\lambda$ sont transmises par le filtre 14 lorsque la relation suivante est vérifiée :

$$\lambda = (n_{eff}(\lambda) - \sin\theta_{inc})(d/q)$$

dans laquelle :

- $\theta_{inc}$ et $\lambda$ sont l'angle et la longueur d'onde incidents,
- d est la période du réseau,
- $n_{eff}(\lambda)$ est l'indice effectif du mode du filtre, et
- q est un entier relatif.

La fréquence de résonance du filtre 14 et donc la valeur des longueurs d'onde transmises par celui-ci ne dépend que de la valeur de l'angle d'incidence $\theta_{inc}$.

Dans le plan focal de la lentille convergente 16, le filtre 14 génère des zones d'iso-longueurs d'onde $\lambda_i$, qui peuvent être en forme de cercles illustrés schématiquement sur la figure 4. Ces cercles d'iso-longueurs d'onde $\lambda_i$ correspondent à des angles $\theta_i$ d'incidence sur le filtre et traduisent le fait qu'un objet étendu est observé à des longueurs d'ondes différentes. Les points de l'objet observé à une même longueur d'onde peuvent être des cercles donnant le même angle d'incidence en entrée du filtre.

Les moyens de détection 6 comprennent une matrice de détecteurs, par exemple une matrice à couplage de charge CCD, comprenant plusieurs rangées de pixels appelées colonnes, 30, 32, 34 disposées selon la direction d'avancement du satellite X.

Les moyens de détection 6 sont disposés pour recevoir le flux dans un domaine angulaire avant ou arrière suivant la vitesse X de défilement du satellite.

En particulier comme visible sur la figure 4, les moyens de détection sont positionnés dans le champ en $\theta_x = -10°$ et $\theta_y = 0°$ ou en $\theta_x = 10°$ et $\theta_y = 0°$ dans lequel $\theta_x$ est parallèle à la direction d'avancement X. La lentille 16 est apte à focaliser les rayonnements filtrés sur une colonne de pixels prédéfinie 30 de sorte que la colonne 30 soit propre à capter l'ensemble des rayonnements filtrés par le filtre 14, c'est-à-dire l'ensemble des rayonnements ayant des longueurs d'onde compris dans la bande spectrale $[\lambda_0, \lambda_3]$ et arrivant suivant un angle d'incidence $\theta_{inc}$ sur le filtre 14 dont la valeur est comprise entre $\theta_0$ et $\theta_3$. Les valeurs mesurées par les pixels de cette colonne 30 sont représentatifs des longueurs d'onde des faisceaux réfléchis par la portion 12 de surface de la terre, chaque pixel voit ainsi une partie de l'objet dans une longueur précise.

Les autres colonnes 32, 34 de la matrice de détecteur sont propres à imager les portions 36, 28 de la surface de la terre adjacentes à la portion 12 et transverses à la direction d'avancement X à un moment donné.

Lorsque le satellite 2 avance d'un pixel sol, les rayonnements réfléchis par la bande de surface 13, sont décomposées par le filtre 14 et captés par la colonne 30. Chaque pixel de la colonne 30 voit toujours la même longueur d'onde mais issue du pixel sol suivant.

De même, les colonnes 32, 34 imagent les deux bandes de surface 40, 42 s'étendant de part et d'autre de la bande 13 quand le satellite avance. Ainsi grâce à l'avance du satellite 2 un pixel au sol sera vu successivement à des longueurs d'onde différentes ce qui permettra l'obtention d'un spectre de l'objet. Comme les moyens de détection sont en deux dimensions, ils acquièrent une image hyperspectrale avec un petit décalage spectral le long de l'axe Y qui peut être facilement étalonné et compensé par traitement.

Les moyens de traitement 8 sont aptes à déterminer les longueurs d'onde des rayonnements réfléchis par une même portion de surface 12 à partir des données mesurées par les pixels de la colonne 30 pendant une période de temps égale à la période de temps nécessaire pour que le déplacement du satellite provoque une variation de l'angle d'incidence $O_{inc}$ permettant le balayage de la plage spectrale $[\lambda_0, \lambda_3]$ du filtre 14.

On notera que l'on a choisi de placer le détecteur dans une zone angulaire de fonctionnement du filtre où la longueur d'onde varie rapidement en fonction de $\theta_{inc}$ suivant l'axe X alors que sur l'axe Y la variation est très faible. L'axe X correspond également à l'axe de déplacement du satellite par rapport à l'objet observé.

En variante, les moyens de détection 6 sont constitués par un dispositif à transfert de charge à deux dimensions de type BBD, CID ou CMOS.

En variante, les moyens de détection 6 comprennent un détecteur à une dimension soit une barrette. Le détecteur linéaire est placé suivant l'axe X et permet d'acquérir le spectre d'une zone grâce à l'avance du satellite. On n'aura pas la capacité d'acquérir une image donnée par le détecteur à deux dimensions.

Le filtre 14 peut-être utilisé en réflexion ou en transmission. Pour un fonctionnement en transmission le filtre 14 comporte un traitement réfléchissant sur toute la bande spectrale d'analyse. Ainsi seule la longueur d'onde de résonnance sera transmise, la réflectivité du filtre donnant la réjection de l'appareil. Pour un fonctionnement en réflexion le filtre 14 comporte en outre une couche antireflet qui laisse passer toute la lumière, ainsi seule la longueur d'onde de résonnance sera réfléchie par le filtre.

Pour simplifier la réalisation du filtre résonnant on utilisera un filtre passe bande en entrée de cet instrument pour limiter le spectre de la lumière entrant dans l'instrument au domaine de $\lambda_0$ à $\lambda_3$.

Avantageusement, le spectromètre est propre à réaliser une décomposition spectrale des rayonnements réfléchis par la surface de la terre 5 en utilisant le déplacement du satellite par rapport à la surface de la terre 5 pour balayer les longueurs d'onde de la plage spectrale $[\lambda_0, \lambda_3]$ de fonctionnement du spectromètre.

Avantageusement, le satellite selon l'invention permet de capturer une information spectrale et une information d'imagerie en un seul passage du satellite.

Le spectromètre de l'invention utilise uniquement un filtre résonant suivi d'un dispositif d'imagerie constitué d'un objectif et d'un détecteur matriciel type CCD ou CMOS. Ce spectromètre associe la résolution angulaire d'un imageur à la résolution spectrale d'un filtre résonnant qui est un dispositif optique ayant une périodicité inférieure à la longueur d'onde et travaillant dans l'ordre zéro.

Suivant la figure 2, le pouvoir de résolution $\lambda/\Delta\lambda$ du filtre 14 peut être supérieur à 10000.

La sensibilité angulaire de la réponse spectrale du filtre résonnant 14 est de l'ordre de $1{,}7 \cdot 10^{-3}$ rd/nm.

Le filtre 14 peut être optimisé pour avoir sa performance spectrale indépendante de la polarisation de la lumière incidente.

Suivant la figure 3, en première approximation, on voit que pour des angles $\theta_{inc}$ petits, $\lambda$ varie linéaire-

ment avec l'angle d'incidence.

En variante, le spectromètre est monté dans un avion et on utilise le déplacement de l'avion pour effectuer l'analyse spectrale.

En variante lorsque l'objet n'est pas à l'infini on peut utiliser un dispositif optique qui assure la fonction de collimation de la lumière de façon que les rayons issus de la zone à analyser soient suffisamment parallèles pour le fonctionnement approprié du filtre.

En variante, lorsque le spectromètre n'est pas monté sur un engin de déplacement, on introduit un dispositif mobile sur un élément du spectromètre. Il peut s'agir soit d'un dispositif permettant une rotation du filtre sur la figure 2, soit d'un dispositif permettant une translation de la lentille 16 sur la figure 2, soit d'un dispositif permettant une translation du détecteur 6 sur la figure 2.

## Revendications

1. Engin aéronautique (2) comportant un spectromètre (4) apte à générer une analyse spectrale de rayonnements réfléchis par une portion (12) de la surface de la terre, l'engin (2) étant en orbite autour de la terre avec un mouvement relatif par rapport à la surface de la terre,
**caractérisé en ce que** le spectromètre (4) comprend un filtre (14) comportant un réseau résonant composé d'une nano-structure périodique et supportant un mode guidé, le filtre (14) étant propre à filtrer la lumière dans une bande spectrale ($\Delta\lambda$) étroite de rayonnements incidents dépendant de l'angle d'incidence ($\theta_{inc,}$) desdits rayonnements sur le filtre (14) ; ladite bande spectrale ($\Delta\lambda$) filtrée étant propre à varier continûment dans une plage spectrale ([$\lambda_0$, $\Delta_3$]) plus large, lorsque l'angle d'incidence ($\theta_{inc,}$) desdits rayonnements incidents varie continûment;
et **en ce que** l'engin (2) comprend des moyens (6, 8) de détermination de la bande spectrale ($\Delta\lambda$) de rayonnements filtrés issus d'une même portion de surface (12) pour plusieurs positions de l'engin (2) par rapport à la portion de surface (12).

2. Engin aéronautique (2) selon la revendication 1, dans lequel les moyens de détermination (6, 8) comporte des moyens de détection (6) de l'amplitude des rayonnements filtrés dans la bande spectrale ($\Delta\lambda$), lesdits moyens de détection (6) comprenant au moins une première colonne de pixels (30) disposée selon une direction (X) d'avancement de l'engin (2), ladite première colonne (30) étant propre à capter les rayonnements filtrés issus de la portion (12) de surface de la terre.

3. Engin aéronautique (2) selon la revendication 1 ou 2, qui comporte des moyens de traitement (8) aptes à déterminer les longueurs d'onde des rayonnements réfléchis par une même portion (12) de surface de la terre à partir des données mesurées pendant une période de temps égale à la période de temps nécessaire pour que le déplacement de l'engin (2) provoque une variation de l'angle d'incidence ($\theta_{inc,}$) des rayonnements issus d'une cible permettant le balayage par la bande spectrale ($\Delta\lambda$) de l'ensemble de la plage spectrale ([$\lambda_0$, $\lambda_3$]) du filtre (14).

4. Engin aéronautique (2) selon l'une quelconque des revendications 2 et 3, dans lequel les moyens de détection (6) comprennent au moins une seconde colonne (32) de pixels parallèle à ladite première colonne (30) de pixels, ladite seconde colonne (32) étant propre à imager des portions (36, 38) de surface de la terre adjacentes à la portion (12) de surface de la terre réfléchissant les rayonnements décomposés par le spectromètre (4).

5. Engin aéronautique (2) selon l'une quelconque des revendications précédentes, dans lequel le filtre (14) est fixe par rapport à l'engin (2).

6. Engin aéronautique (2) selon l'une quelconque des revendications précédentes, dans lequel la plage spectrale ([$\lambda_0$, $\lambda_3$]) est plus de 100 fois plus large que la bande spectrale ($\Delta\lambda$).

7. Procédé d'analyse spectrale de rayonnements réfléchis par une portion (12) de surface de la terre à l'aide d'un engin aéronautique (2) propre à se déplacer en orbite autour de la terre avec un mouvement relatif par rapport à la surface de la terre, ledit engin (2) comprenant un spectromètre (4) comportant un filtre (14) comportant un réseau résonant composé d'une nano-structure périodique supportant un mode guidé, le filtre (14) étant propre à filtrer la lumière dans une bande spectrale ($\Delta\lambda$) étroite dépendant d'un angle d'incidence ($\theta_{inc,}$) desdits rayonnements sur le filtre (14) ; **caractérisé en ce que** le procédé comporte :

   - une étape de filtrage des rayonnements réfléchis par ladite portion de surface (12) ;
   - une étape déplacement de l'engin (2) par rapport à ladite portion de surface (12), ladite étape de déplacement étant réalisée pendant l'étape de filtrage, la bande spectrale ($\Delta\lambda$) filtrée variant continûment dans une plage spectrale [$\lambda_0$, $\lambda_3$] plus large lorsque l'angle d'incidence ($\theta_{inc,}$) des rayonnements incidents sur le filtre (14) varie continûment ;
   - une étape de détermination de la bande spectrale ($\Delta\lambda$) de rayonnements filtrés issus d'une même portion de surface (12) pour plusieurs positions relatives de l'engin (2) par rapport à la portion de surface (12).

**Patentansprüche**

1. Luftfahrtfahrzeug bzw. Fluggerät (2), ein Spektrometer (4) umfassend, fähig eine Spektralanalyse der durch einen Abschnitt (12) der Erdoberfläche reflektierten Strahlungen zu erzeugen, wobei das Fluggerät (2) sich in einer Umlaufbahn um die Erde befindet, mit einer Relativbewegung in Bezug auf die Erdoberfläche,
**dadurch gekennzeichnet, dass** das Spektrometer (4) ein Filter (14) mit einem Resonanzgitter umfasst, gebildet durch eine periodische Nanostruktur und eine geführte Mode unterstützend, wobei das Filter (14) fähig ist, das Licht in einem schmalen Spektralband ($\Delta\lambda$) einfallender Strahlungen zu filtern, abhängig vom Einfallwinkel ($\theta_{inc}$) der genannten Strahlungen in das Filter (14) ; wobei das genannte gefilterte Spektralband ($\Delta\lambda$) fähig ist, stetig in einem breiteren Spektralbereich ([$\lambda_0,\lambda_3$]) zu variieren, wenn der Einfallwinkel ($\theta_{inc}$) der genannten einfallenden Strahlungen stetig variiert;
und dadurch, dass das Fluggerät (2) Mittel (6, 8) zur Bestimmung des Spektralbands ($\Delta\lambda$) von gefilterten Strahlungen umfasst, die für mehrere Positionen des Fluggeräts (2) in Bezug auf den Oberflächenabschnitt (12) aus einem selben Oberflächenabschnitt (12) stammen.

2. Fluggerät (2) nach Anspruch 1, bei dem die Bestimmungsmittel (6, 8) Detektionsmittel (6) der Amplitude der gefilterten Strahlungen in dem Spektralband ($\Delta\lambda$) umfassen, wobei die genannten Detektionsmittel (6) wenigstens eine gemäß einer Vorwärtsbewegungsrichtung (X) des Fluggeräts (2) angeordnete erste Pixelspalte (30) erfassen, und die genannte erste Spalte (30) geeignet ist, die aus dem Erdoberflächenabschnitt (12) stammenden gefilterten Strahlungen zu empfangen.

3. Fluggerät (2) nach Anspruch 1 oder 2, das Verarbeitungsmittel (8) umfasst, fähig die Wellenlängen der durch einen selben Erdoberflächenabschnitt (12) reflektierten Strahlungen aus den während einer Zeitperiode gemessenen Daten zu bestimmen, die gleich lang ist wie die Zeitperiode, die notwendig ist, damit die Fortbewegung des Geräts (2) eine die Abtastung des gesamten Spektralbereichs ([$\lambda_0,\lambda_3$]) des Filters (14) ermöglichende Änderung des Einfallwinkels ($\theta_{inc}$) der von einem Ziel stammenden Strahlungen bewirkt.

4. Fluggerät (2) nach einem der Ansprüche 2 und 3, bei dem die Detektionsmittel (6) wenigstens eine zweite Pixelspalte (32), parallel zu der ersten Pixelspalte (30) umfassen, wobei die zweite Pixelspalte (32) geeignet ist, Erdoberflächenabschnitte (36, 38) darzustellen, die angrenzen an den Erdoberflächenabschnitt (12), der die durch den Spektrometer (4) zerlegten Strahlungen reflektiert.

5. Fluggerät (2) nach einem der vorhergehenden Ansprüche, bei dem das Filter (14) fest ist in Bezug auf das Fluggerät.

6. Fluggerät (2) nach einem der vorhergehenden Ansprüche, bei dem der Spektralbereich ([$\lambda_0,\lambda_3$]) mehr als 100-mal breiter ist als das Spektralband ($\Delta\lambda$).

7. Verfahren zur Spektralanalyse der durch einen Erdoberflächenabschnitt (12) reflektierten Strahlungen mit Hilfe eines Fluggeräts (2), das sich in einer Umlaufbahn um die Erde befindet, mit einer Relativbewegung in Bezug auf die Erdoberfläche, und das genannte Fluggerät dabei einen Spektrometer (4) mit einem Filter (14) mit einem Resonanzgitter umfasst, gebildet durch eine eine geführte Mode unterstützende periodische Nanostruktur, wobei das Filter (14) fähig ist, das Licht in einem schmalen Spektralband ($\Delta\lambda$) einfallender Strahlungen zu filtern, abhängig vom Einfallwinkel ($\theta_{inc}$) der genannten Strahlungen in das Filter (14); **dadurch gekennzeichnet, dass** das Verfahren umfasst:

    - einen Schritt zur Filterung der durch den genannten Oberflächenabschnitt (12) reflektierten Strahlungen ;
    - einen Schritt zur Verschiebung des Fluggeräts (2) in Bezug auf den genannten Oberflächenabschnitt (12), wobei der genannte Verschiebungsschritt während des Filterungsschritts realisiert wird, das gefilterte Spektralband ($\Delta\lambda$) in einem breiteren Spektralbereich ([$\lambda_0,\lambda_3$]) stetig variiert, wenn der Einfallwinkel ($\theta_{inc}$) der einfallenden Strahlungen in das Filter (14) stetig variiert ;
    - einen Schritt zur Bestimmung des Spektralbands ($\Delta\lambda$) der von einem selben Oberflächenabschnitt (12) stammenden gefilterten Strahlungen für mehrere Relativpositionen des Fluggeräts (2) in Bezug auf den Oberflächenabschnitt (12).

**Claims**

1. Aeronautical vehicle (2) comprising a spectrometer (4) suitable for generating a spectral analysis of radiation reflected by a portion (12) of the earth's surface, the vehicle (2) being in orbit around the earth with a relative movement in relation to the earth's surface,
**characterised in that** the spectrometer (4) comprises a filter (14) having a resonant grating composed of a periodic nanostructure and supporting a guided mode, the filter (14) being capable of filtering light in a narrow spectral band ($\Delta\lambda$) of incident radiation de-

pendent on the angle of incidence ($\theta_{inc}$) of said radiation on the filter (14); said filtered spectral band ($\Delta\lambda$) being capable of varying continuously in a broader spectral range ($[\lambda_0,\lambda_3]$) when the angle of incidence ($\theta_{inc}$) of said incident radiation varies continuously; and **in that** the vehicle (2) comprises means (6, 8) for determining the spectral band ($\Delta\lambda$) of filtered radiation coming from a single surface portion (12) for a plurality of positions of the vehicle (2) in relation to the surface portion (12).

2. Aeronautical vehicle (2) according to claim 1, in which the determination means (6, 8) comprise means (6) for detecting the amplitude of the filtered radiation in the spectral band ($\Delta\lambda$), said detection means (6) comprising at least a first column of pixels (30) arranged in a direction (X) of forward movement of the vehicle (2), said first column (30) being capable of capturing the filtered radiation coming from the portion (12) of the earth's surface.

3. Aeronautical vehicle (2) according to claim 1 or 2, which comprises processing means (8) suitable for determining the wavelengths of the radiation reflected by a single portion (12) of the earth's surface from data measured during a period of time equal to the period of time necessary for the displacement of the vehicle (2) to cause a variation in the angle of incidence ($\Delta_{inc}$) of the radiation coming from a target permitting scanning by the spectral band ($\Delta\lambda$) of the totality of the spectral range ($[\lambda_0,\lambda_3]$) of the filter (14).

4. Aeronautical vehicle (2) according to either claim 2 or claim 3, in which the detection means (6) comprise at least a second column (32) of pixels parallel to said first column (30) of pixels, said second column (32) being capable of imaging portions (36, 38) of the earth's surface adjacent to the portion (12) of the earth's surface reflecting the radiation decomposed by the spectrometer (4).

5. Aeronautical vehicle (2) according to any one of the preceding claims, in which the filter (14) is fixed in relation to the vehicle (2).

6. Aeronautical vehicle (2) according to any one of the preceding claims, in which the spectral range ($[\lambda_0, \lambda_3]$) is more than 100 times broader than the spectral band ($\Delta\lambda$).

7. Method for the spectral analysis of radiation reflected by a portion (12) of the earth's surface by means of an aeronautical vehicle (2) capable of moving in orbit around the earth with a relative movement in relation to the earth's surface, said vehicle (2) comprising a spectrometer (4) comprising a filter (14) having a resonant grating composed of a periodic nanostructure supporting a guided mode, the filter (14) being capable of filtering light in a narrow spectral band ($\Delta\lambda$) dependent on an angle of incidence ($\theta_{inc}$) of said radiation on the filter (14); **characterised in that** the method comprises:

- a step of filtering the radiation reflected by said surface portion (12);
- a step of displacing the vehicle (2) relative to said surface portion (12), said displacement step being carried out during the filtering step, the filtered spectral band ($\Delta\lambda$) varying continuously within a broader spectral range $[\lambda_0,\lambda_3]$ when the angle of incidence ($\theta_{inc}$) of the incident radiation on the filter (14) varies continuously;
- a step of determining the spectral band ($\Delta\lambda$) of filtered radiation coming from a single surface portion (12) for a plurality of relative positions of the vehicle (2) in relation to the surface portion (12).

## FIG.1

$\theta_{inc}$

## FIG.2

**FIG.3**

**FIG.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0767361 A

- JP 4340428 A